# EUROPEAN PATENT SPECIFICATION

(11) **EP 3 575 052 B1**
(45) Date of publication and mention of the grant of the patent: **03.01.2024**
(21) Application number: 19177765.5
(22) Date of filing: 31.05.2019
(51) Int. Cl.: B27D 5/00, B23C 3/12

(54) **END TRIMMER ASSEMBLY, FOR AN EDGEBANDING MACHINE TO EDGEBAND PANELS MADE OF WOOD OR THE LIKE;**
ENDBEARBEITUNGSVORRICHTUNG FÜR EINE KANTENLEIMMASCHINE FÜR HOLZPANELE ODER DERGLEICHEN
GROUPE D'ÉBAVURAGE POUR UNE MACHINE DE POSE DE BORDURE POUR PLAQUES DE BOIS OU DE MATERIAU SIMILAIRE

(30) Priority: 01.06.2018 IT 201800005935
(43) Date of publication of application: 04.12.2019
(73) Proprietor: BIESSE S.p.A., 61122 Pesaro (IT)
(72) Inventor: Agostini, Federico, 61122 Pesaro (PU) (IT); Saltarelli, Roberto, 61122 Pesaro (PU) (IT)
(74) Representative: Studio Torta S.p.A.

(56) References cited:
- EP-A1- 2 808 138
- WO-A2-02/055247
- DE-A1- 2 553 042
- DE-C1- 10 229 775

## Description

### TECHNICAL FIELD

The present invention relates to an end trimmer assembly for edgebanding machines to edgeband panels made of wood or the like, according to the preamble of claim 1. Such an end trimmer is known from the document DE 102 29 775 C1.

### BACKGROUND ART

Each panel has two larger side faces parallel to each other, two first smaller side faces parallel to each other and perpendicular to the larger side faces, and two second smaller side faces parallel to each other and perpendicular to the first smaller side faces.

At least one of the second smaller side faces is provided with a finishing edge which normally has two opposite end portions, each of which projects from a relative first smaller side face in a first direction, which is orthogonal to the first smaller side face.

The end trimmer assembly comprises a support frame and, for each end portion of the finishing edge, a corresponding end trimming unit.

Each end trimming unit comprises a first slide, which is slidingly coupled to the support frame in order to make straight movements along the support frame in the first direction; a copy attachment mounted on the first slide and which, in use, is designed to be arranged in contact with the corresponding first smaller side face; a second slide which is slidingly coupled to the first slide so as to make, with respect to the first slide, straight movements in the first direction; a third slide which is slidingly coupled to the second slide so as to make, with respect to the second slide, straight movements in a second direction substantially transverse to the first direction; and a cutting device mounted on the third slide so as to move in the second direction and cut at least part of the end portion of the finishing edge.

The copy attachment is rotatably coupled to the first slide so as to move between a rest position, in which the copy attachment is arranged on the outside of a feeding path of the panels in the first direction, and an operating position, in which the copy attachment is arranged on the inside of the feeding path of the panels in the first direction.

The end trimming unit also comprises an operating device to move the first slide and the second slide (i.e. the cutting device and the copy attachment) relative to each other in the first direction between a first operating position, in which the cutting device substantially separates the entire end portion from the finishing edge, and a second operating position, in which the cutting device only separates part of the end portion from the finishing edge.

The operating device comprises an actuating cylinder located in the second slide and provided with an output rod attached to the first slide.

Since each cutting device and its copy attachment are mobile in relation to each other only in the first and second operating positions mentioned above, the known end trimmer assemblies of the type described above have some drawbacks mainly due to the fact that the end trimming units have relatively low flexibility and versatility and do not allow selective control of the part of each end portion that is separated from the finishing edge.

### DISCLOSURE OF INVENTION

The purpose of the present invention is to provide an end trimmer assembly for edgebanding machines to edgeband panels made of wood or the like, which is free from the drawbacks described above and simple and inexpensive to manufacture.

According to the present invention, an end trimmer assembly for edgebanding machines to edgeband panels made of wood or the like is provided as claimed in the appended claims.

### BRIEF DESCRIPTION OF THE DRAWINGS

The present invention will now be described with reference to the accompanying drawings, which illustrate a non-limiting embodiment thereof, in which:
Figure 1 is a schematic perspective view, with parts removed for the sake of clarity, of a preferred embodiment of the end trimmer assembly according to the present invention;
Figure 2 is a schematic perspective view, with parts removed for the sake of clarity, of a detail of the end trimmer assembly in Figure 1;
Figure 3 is a schematic perspective view, with parts removed for the sake of clarity, of a detail of Figure 2;
Figure 4 is a schematic front view, with parts removed for clarity, of a first detail of Figure 3; and
Figure 5 is a schematic plan view, with parts removed for clarity, of a second detail of Figure 3 illustrated in two different operating positions.

### BEST MODE FOR CARRYING OUT THE INVENTION

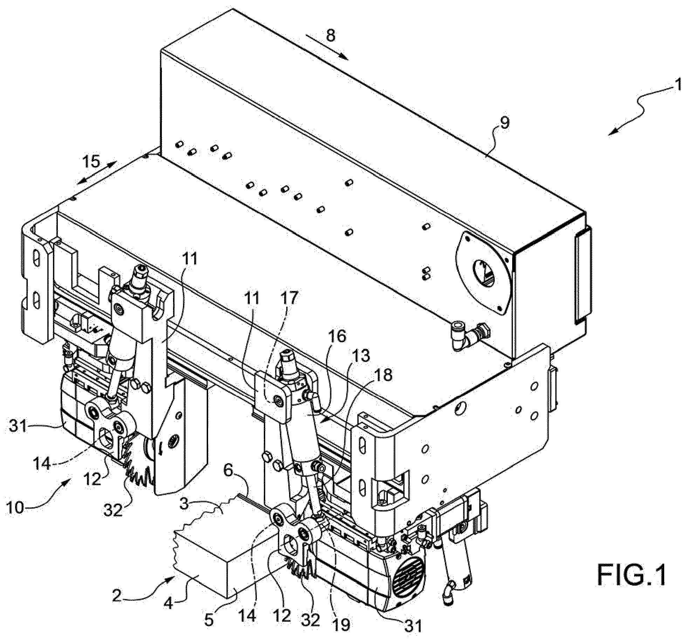

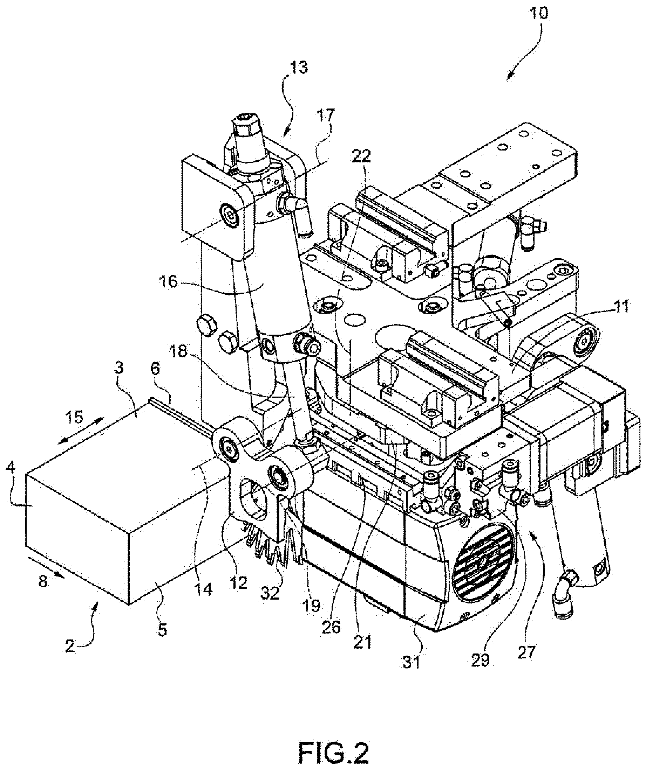

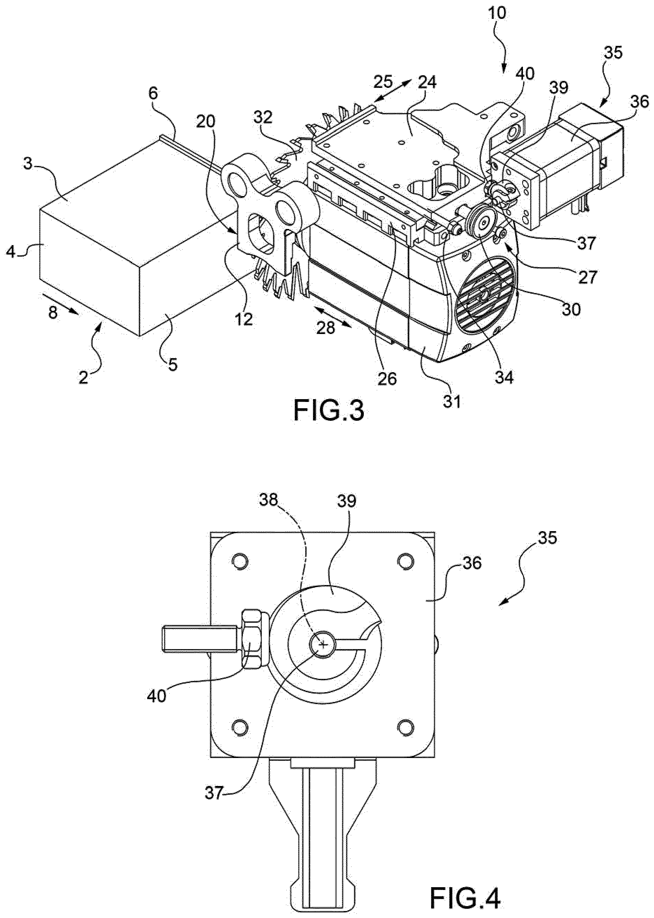

With reference to Figures 1 to 5, reference numeral 1 indicates, as a whole, an end trimmer assembly for finishing substantially flat panels 2 made of wood or the like.

In this case, each panel 2 has a substantially parallelepiped shape, and is delimited by two larger side faces 3 parallel to each other, by two smaller side faces 4 parallel to each other and perpendicular to the faces 3, and by two smaller side faces 5 parallel to each other and perpendicular to the faces 3 and 4.

At least one of the faces 4 is provided with a finishing edge 6 having, in its initial configuration, two opposite end portions 7, each of which projects from a relative face 5 in a horizontal direction 8 which is perpendicular to the same faces 5.

The end trimmer assembly 1 comprises an elongated frame 9, which extends in the direction 8, and supports two end trimming units 10 each of which is associated with a relative portion 7.

Each unit 10 comprises a first horizontal slide 11 slidingly coupled to the frame 9 so as to make straight movements along the frame 9 in the direction 8; and a front copy attachment 12 hinged to the slide 11 so as to rotate, with respect to the slide 11 and driven by an operating device 13, around a fulcrum axis 14 which is parallel to a horizontal direction 15 transversal to the direction 8.

The device 13 comprises an actuating cylinder 16, which is hinged to the slide 11 so as to rotate, with respect to the slide 11, around a fulcrum axis 17 which is parallel to the axis 14, and has an output rod 18 hinged to the copy attachment 12 so as to rotate, with respect to the copy attachment 12, around a fulcrum axis 19 parallel to axes 14 and 17.

The copy attachment 12 is delimited by a substantially flat face 20, and is moved by the cylinder 16 between a raised rest position (not illustrated), in which the copy attachment 12 is arranged on the outside of a feeding path of the panels 2 in the direction 8, and a lowered operating position (Figures 1, 2 and 3), in which the copy attachment 12 is arranged on the inside of the feeding path of the panels 2 to allow the face 20 to come into contact with a face 5 of the panels 2.

The unit 10 further comprises a rotary plate 21 which is mounted below the slide 11 and is rotatably coupled to the slide 11 so as to move, with respect to the slide 11, around a rotation axis 22 substantially parallel to a vertical direction 23 orthogonal to directions 8 and 15.

The unit 10 further comprises a second horizontal slide 24 slidingly coupled to the plate 21, so as to make, with respect to the plate 21 and driven by a known operating device that is not illustrated, straight movements in a horizontal direction 25, the orientation of which depends on the position of the plate 21 around the axis 22.

The unit 10 also comprises a third horizontal slide 26, which is slidingly coupled to the slide 24 so as to make, with respect to the slide 24 and driven by an operating device 27, straight movements in a horizontal direction 28, which extends transversely to the direction 25 and is oriented according to the position of the plate 21 around the axis 22.

The device 27 comprises an actuating cylinder 29, which is located in the slide 26, and has an output rod 30, which extends in the direction 28, and is attached to the slide 24.

The slide 26 supports an electrospindle 31 equipped with an output shaft (not shown), which extends in the direction 28, and has a fitted cutting blade 32 mounted so as to rotate around a rotation axis 33 which is substantially parallel to the direction 28.

In this regard, it should be noted that, depending on the position of the plate 21 around the axis 22, the directions 8 and 28 may coincide with each other or be inclined with respect to each other and, therefore, the blade 32 performs cuts of the edge 6 which are parallel to the direction 15 or inclined at an angle between 0° and 90° with respect to the faces 4.

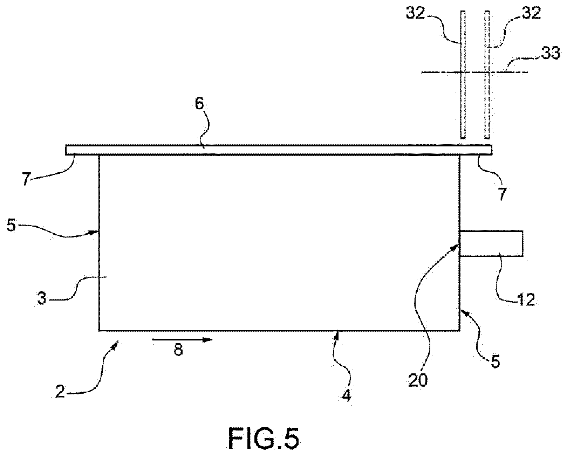

The slide 26 is movable, driven by the cylinder 29, in a first operating position (illustrated by a dashed line in Figure 5), in which the slide 26 comes into contact with a limit stop element 34 on the slide 24 and the blade 32 only separates part of the portion 7 from the edge 6.

The slide 26 is also equipped with an adjustable limit stop device 35, designed to selectively control in a continuous manner the position of the slide 26 and, therefore, of the blade 32 in the direction 28 from the first operating position.

The device 35 comprises an electric motor 36, which is attached to the slide 26 parallel to the direction 28, and has an output shaft 37 mounted so as to rotate around a rotation axis 38 parallel to the direction 28.

A cam 39 is fitted to the shaft 37, is delimited by an outer side wall wound around the axis 38 in a helical shape, and cooperates with a counteracting pin 40 projecting outwards from the slide 24.

Depending on the angular position of the cam 39 around the axis 38, the slide 26 is movable, driven by the cylinder 29, in a second operating position (illustrated by a continuous line in Figure 5), in which the blade 32 substantially separates the entire portion 7 from the edge 6, or in a third operating position arranged between the aforementioned first and second operating positions.

In use, the slide 26 is moved by the operating device 27 to its first operating position so as to disengage the cam 39 from the pin 40, the cam 39 is rotated by the motor 36 around the axis 38, and the slide 26 is moved again by the operating device 27 in the direction 28 so as to stop the cam 39 against the pin 40 and the slide 26 and, therefore, the blade 32 into the second operating position or third operating position.

The adjustable limit stop device 35 has some advantages mainly due to the fact that the cam 39 allows to selectively control in a continuous manner the position of the blade 32 in the direction 28 and, therefore, the part of the portion 7 separated from the edge 6.

In addition, since the rotation axis 38 of the cam 39 is perpendicular to the rotation axis 33 of the cutting blade 32, the end trimmer assembly 1 is relatively compact.

According to an alternative embodiment not illustrated herein, the cam 39 is removed and replaced with a different limit stop element, whose outer side wall has variable distances from the axis 38.

According to another alternative embodiment which is not shown, the actuating cylinder 29 is removed and replaced, for example, with a spring interposed between the slides 24 and 26 to keep the cam 39 in contact with the pin 40.

The angular position of the cam 39 around the axis 38 allows to selectively control in a continuous manner the position of the blade 32 in the direction 28 and, therefore, the part of the portion 7 separated from the edge 6.

In other words, by combining the action of the spring with the angular position of the cam 39 around the axis 38, the slide 26 is moved in the direction 28 to a first operating position, in which the blade 32 substantially separates the entire portion 7 from the edge 6, or to a second operating position, in which the blade 32 only separates part of the portion 7 from the edge 6.

## Claims

1. An end trimmer assembly for edgebanding machines to edgeband panels (2) made of wood or the like, each panel (2) being delimited by a first side face (5) and by a second side face (4), which is orthogonal to the first side face (5) and is provided with a finishing edge (6) having at least one end portion (7) projecting from the first side face (5) in a first direction (8), which is orthogonal to the first side face (5); the end trimmer assembly comprising at least one cutting device (31, 32) comprising a cutting blade (32), which is mounted so as to rotate around a rotation axis (33) and to cut at least part of the end portion (7); a copy attachment (12), which is designed to be arranged in contact, in use, with the first side face (5); and an operating device (29) to move the cutting blade (32) and the copy attachment (12) relative to one another in a second direction (28), which is parallel to the rotation axis (33) of the cutting blade (32); and being **characterized in that** it further comprises a limit stop device (39), which can be adjusted so as to stop the cutting blade (32) in the second direction (28), and an actuating device (36) to adjust the position of the limit stop device (39) and stop the cutting blade (32) in a first operating position, in which the cutting blade (32) substantially separates the entire end portion (7) from the finishing edge (6), or in a second operating position, in which the cutting blade (32) only separates part of the end portion (7) from the finishing edge (6).

2. The end trimmer assembly according to claim 1, wherein the actuating device (36) is configured to selectively adjust in a continuous manner the position of the limit stop device (39) in the second direction (28) and, hence, the second operating position of the cutting blade (32).

3. The end trimmer assembly according to claim 1 or 2, wherein the limit stop device (39) comprises a cam, which is mounted so as to rotate around a rotation axis (38), which is parallel to a third direction (25), which is transverse to the second direction (28).

4. The end trimmer assembly according to claim 3, wherein the actuating device (36) comprises an electric motor, which is provided with an output shaft (37), on which the cam is mounted.

5. The end trimmer assembly according to claim 3 or 4, wherein the cam is delimited by an outer side wall having a variable distance from the rotation axis (38) of the cam, in particular wound in a helical shape around the rotation axis (38) of the cam.

6. The end trimmer assembly according to any one of the preceding claims and further comprising a first slide (11), which is mounted so as to make straight movements in the first direction (8); a second slide (26), which is mounted so as to make, relative to the first slide (11), straight movements in the second direction (28); and a third slide (24), which is mounted so as to move the cutting blade (32) relative to the first slide (11) in order to cut the end portion (7).

7. The end trimmer assembly according to claim 6 and further comprising a rotary plate (21), which is interposed between the first slide (11) and one of said second and third slides (26, 24) and is mounted so as to rotate around a rotation axis (22).

8. The end trimmer assembly according to claim 6 or 7, wherein the copy attachment (12) is supported by the first slide (11) and the cutting blade (32) is supported by one of said second and third slides (26, 24).

9. The end trimmer assembly according to any one of the claims from 6 to 8, wherein the operating device (27) comprises an actuating cylinder (29).

10. The end trimmer assembly according to any one of the claims from 6 to 8, wherein the operating device (27) comprises elastic thrust means.

11. The end trimmer assembly according to any one of the preceding claims, wherein the copy attachment (12) is movable between a rest position, in which the copy attachment (12) is arranged on the outside of a feeding path of the panels (2) in the first direction (8), and an operating position, in which the copy attachment (12) is arranged on the inside of the feeding path of the panels (2) in the first direction (8).

12. The end trimmer assembly according to any one of the preceding claims, wherein said first and second directions (8, 28) coincide with one another.

## Patentansprüche

1. Endschneideanordnung für Kantenanleimmaschinen für Kantenbandplatten (2), die aus Holz oder dergleichen hergestellt sind, wobei jede Platte (2) durch eine erste Seitenfläche (5) und durch eine zweite Seitenfläche (4), die orthogonal zu der ersten Seitenfläche (5) ist, begrenzt ist, und mit einer Endkante (6) versehen ist, die wenigstens einen Endabschnitt (7) aufweist, der von der ersten Seitenfläche (5) in einer ersten Richtung (8) vorsteht, die orthogonal zu der ersten Seitenfläche (5) ist; wobei die Endschneideanordnung umfasst wenigstens eine Schneidvorrichtung (31, 32), die eine Schneidklinge (32) umfasst, die so montiert ist, dass sie sich um eine Drehachse (33) dreht und wenigstens einen Teil des Endabschnitts (7) schneidet; einen Kopieraufsatz (12), der so ausgelegt ist, dass er im Einsatz in Kontakt mit der ersten Seitenfläche (5) angeordnet ist; und eine Betriebsvorrichtung (29) zum Bewegen der Schneidklinge (32) und des Kopieraufsatzes (12) relativ zueinander in einer zweiten Richtung (28), die parallel zu der Drehachse (33) der Schneidklinge (32) ist; und **dadurch gekennzeichnet, dass** sie ferner umfasst eine Endanschlagvorrichtung (39), die so eingestellt werden kann, dass sie die Schneidklinge (32) in der zweiten Richtung (28) stoppt, und eine Betätigungsvorrichtung (36) zum Einstellen der Position der Endanschlagvorrichtung (39) und zum Stoppen der Schneidklinge (32) in einer ersten Betriebsposition, in der die Schneidklinge (32) im Wesentlichen den gesamten Endabschnitt (7) von der Endkante (6) trennt, oder in einer zweiten Betriebsposition, in der die Schneidklinge (32) nur einen Teil des Endabschnitts (7) von der Endkante (6) trennt.

2. Endschneideanordnung nach Anspruch 1, wobei die Betätigungsvorrichtung (36) so konfiguriert ist, dass sie die Position der Endanschlagvorrichtung (39) in der zweiten Richtung (28) und somit die zweite Betriebsposition der Schneidklinge (32) selektiv in einer kontinuierlichen Weise einstellt.

3. Endschneideanordnung nach Anspruch 1 oder 2, wobei die Endanschlagvorrichtung (39) einen Nocken umfasst, der so montiert ist, dass er sich um eine Drehachse (38) dreht, die parallel zu einer dritten Richtung (25) ist, die quer zu der zweiten Richtung (28) ist.

4. Endschneideanordnung nach Anspruch 3, wobei die Betätigungsvorrichtung (36) einen Elektromotor umfasst, der mit einer Ausgangswelle (37) versehen ist, an der der Nocken montiert ist.

5. Endschneideanordnung nach Anspruch 3 oder 4, wobei der Nocken durch eine Außenseitenwand begrenzt ist, die einen variablen Abstand von der Drehachse (38) des Nockens hat, insbesondere in einer Schraubenlinienform um die Drehachse (38) des Nockens gewunden ist.

6. Endschneideanordnung nach einem der vorhergehenden Ansprüche und ferner umfassend einen ersten Schlitten (11), der so montiert ist, dass er geradlinige Bewegungen in der ersten Richtung (8) ausführt; einen zweiten Schlitten (26), der so montiert ist, dass er relativ zu dem ersten Schlitten (11) geradlinige Bewegungen in der zweiten Richtung (28) ausführt; und einen dritten Schlitten (24), der so montiert ist, dass er die Schneidklinge (32) relativ zu dem ersten Schlitten (11) bewegt, um den Endabschnitt (7) zu schneiden.

7. Endschneideanordnung nach Anspruch 6 und ferner umfassend eine Drehplatte (21), die zwischen dem ersten Schlitten (11) und einem von dem zweiten oder dem dritten Schlitten (26, 24) angeordnet ist und so montiert ist, dass sie sich um eine Drehachse (22) dreht.

8. Endschneideanordnung nach Anspruch 6 oder 7, wobei der Kopieraufsatz (12) durch den ersten Schlitten (11) getragen wird und die Schneidklinge (32) durch einen von dem zweiten oder dem dritten Schlitten (26, 24) getragen wird.

9. Endschneideanordnung nach einem der Ansprüche 6 bis 8, wobei die Betriebsvorrichtung (27) einen Betätigungszylinder (29) umfasst.

10. Endschneideanordnung nach einem der Ansprüche 6 bis 8, wobei die Betriebsvorrichtung (27) elastische Schubmittel umfasst.

11. Endschneideanordnung nach einem der vorhergehenden Ansprüche, wobei der Kopieraufsatz (12) zwischen einer Ruheposition, in der der Kopieraufsatz (12) an der Außenseite eines Zuführpfads der Platten (2) in der ersten Richtung (8) angeordnet ist, und einer Betriebsposition, in der der Kopieraufsatz (12) an der Innenseite des Zuführpfads der Platten (2) in der ersten Richtung (8) angeordnet ist, bewegbar ist.

12. Endschneideanordnung nach einem der vorhergehenden Ansprüche, wobei die erste und die zweite Richtung (8, 28) zusammenfallen.

## Revendications

1. Ensemble de coupe en bout pour plaqueuses de chants pour plaquer des chants de panneaux (2) en bois ou similaires, chaque panneau (2) étant délimité par une première face latérale (5) et par une seconde face latérale (4), qui est orthogonale à la première face latérale (5) et qui est pourvue d'un bord de finition (6) ayant au moins une partie d'extrémité (7) faisant saillie de la première face latérale (5) dans une première direction (8), qui est orthogonale à la première face latérale (5) ; l'ensemble de coupe en bout comprenant au moins un dispositif de coupe (31, 32) comprenant une lame de coupe (32), qui est montée de manière à tourner autour d'un axe de rotation (33) et à couper au moins une partie de la partie d'extrémité (7) ; un accessoire de copie (12), qui est conçu pour être disposé en contact, lors de l'utilisation, avec la première face latérale (5) ; et un dispositif de commande (29) pour déplacer la lame de coupe (32) et l'accessoire de copie (12) l'un par rapport à l'autre dans une deuxième direction (28), qui est parallèle à l'axe de rotation (33) de la lame de coupe (32) ; et **caractérisé en ce qu'**il comprend en outre un dispositif de butée de fin de course (39), qui peut être réglé de manière à arrêter la lame de coupe (32) dans la deuxième direction (28), et un dispositif d'actionnement (36) pour régler la position du dispositif de butée de fin de course (39) et arrêter la lame de coupe (32) dans une première position de fonctionnement, dans laquelle la lame de coupe (32) sépare sensiblement toute la partie d'extrémité (7) du bord de finition (6), ou dans une seconde position de fonctionnement, dans laquelle la lame de coupe (32) ne sépare qu'une partie de la partie d'extrémité (7) du bord de finition (6).

2. Ensemble de coupe en bout selon la revendication 1, dans lequel le dispositif d'actionnement (36) est configuré pour régler sélectivement et de manière continue la position du dispositif de butée de fin de course (39) dans la deuxième direction (28) et, par conséquent, la seconde position de fonctionnement de la lame de coupe (32).

3. Ensemble de coupe en bout selon la revendication 1 ou 2, dans lequel le dispositif de butée de fin de course (39) comprend une came montée de manière à tourner autour d'un axe de rotation (38), qui est parallèle à une troisième direction (25), qui est transversale à la deuxième direction (28) .

4. Ensemble de coupe en bout selon la revendication 3, dans lequel le dispositif d'actionnement (36) comprend un moteur électrique doté d'un arbre de sortie (37) sur lequel la came est montée.

5. Ensemble de coupe en bout selon la revendication 3 ou 4, dans lequel la came est délimitée par une paroi latérale extérieure ayant une distance variable par rapport à l'axe de rotation (38) de la came, en particulier enroulée en forme d'hélice autour de l'axe de rotation (38) de la came.

6. Ensemble de coupe en bout selon l'une quelconque des revendications précédentes et comprenant en outre une première glissière (11), montée de manière à effectuer des mouvements rectilignes dans la première direction (8) ; une deuxième glissière (26), montée de manière à effectuer, par rapport à la première glissière (11), des mouvements rectilignes dans la deuxième direction (28) ; et une troisième glissière (24), montée de manière à déplacer la lame de coupe (32) par rapport à la première glissière (11) afin de couper la partie d'extrémité (7).

7. Ensemble de coupe en bout selon la revendication 6 et comprenant en outre un plateau rotatif (21), qui est interposé entre la première glissière (11) et l'une desdites deuxième et troisième glissières (26, 24) et qui est monté de manière à tourner autour d'un axe de rotation (22).

8. Ensemble de coupe en bout selon la revendication 6 ou 7, dans lequel l'accessoire de copie (12) est supporté par la première glissière (11) et la lame de coupe (32) est supportée par l'une des deuxième et troisième glissières (26, 24).

9. Ensemble de coupe en bout selon l'une quelconque des revendications 6 à 8, dans lequel le dispositif de commande (27) comprend un cylindre d'actionnement (29).

10. Ensemble de coupe en bout selon l'une quelconque des revendications 6 à 8, dans lequel le dispositif de commande (27) comprend des moyens de poussée élastiques.

11. Ensemble de coupe en bout selon l'une quelconque des revendications précédentes, dans lequel l'accessoire de copie (12) est mobile entre une position de repos, dans laquelle l'accessoire de copie (12) est disposé à l'extérieur d'un chemin d'alimentation des panneaux (2) dans la première direction (8), et une position de fonctionnement, dans laquelle l'accessoire de copie (12) est disposé à l'intérieur du chemin d'alimentation des panneaux (2) dans la première direction (8).

12. Ensemble de coupe en bout selon l'une quelconque des revendications précédentes, dans lequel lesdites première et deuxième directions (8, 28) coïncident l'une avec l'autre.
